# EUROPÄISCHE PATENTANMELDUNG

(11) **EP 0 976 588 A1**
(43) Veröffentlichungstag der Anmeldung: **02.02.2000**
(21) Anmeldenummer: 98114259.9
(22) Anmeldetag: 30.07.1998
(51) Int. Cl.: B60C 27/00

(54) **Vorrichtung zum Schutz einer Felge eines Fahrzeugrades**

(71) Anmelder: Ottinger, Regina, 78224 Singen (DE)
(72) Erfinder: Ottinger, Regina, 78224 Singen (DE)
(74) Vertreter: Weiss, Peter, Dr. rer. nat.

(57) **Zusammenfassung**

Bei einer Vorrichtung zum Schutz einer Felge gegen nahe der Felge (3) angeordnete, insbesondere metallische Bauteile (6, 7, 7.1, 18), wie Kettenglieder, Schloss, Verbindungsglieder, soll zwischen dem Bauteil (6, 7, 7.1, 18) und der Felge (3) zumindest ein Puffer (11, 11.1) angeordnet werden, der das Bauteil (6, 7.1, 18) zumindest teilweise oder ganz umfängt.

## Beschreibung

Die Erfindung betrifft eine Vorrichtung zum Schutz einer Felge eines Fahrzeugreifens gegen nahe der Felge angeordnete, insbesondere metallische Bauteile, wie Kettenglieder, Schloss, Verbindungsglieder.

Beispielsweise Ring-, Eis- oder Schneeketten, Anfahrhilfe und unterschiedlichen Montagesystem, die runden das Rad Anwendung finden, weisen Bauteile auf, die mit der Felge in Berührung kommen können. Dazu zählen auch weitere Anfahrhilfen, wie beispielsweise mit der Felge verbundene Kreuze oder Sterne, Platten mit Spikes, die auf die Laufffläche des Fahrzeugreifens gelegt werden usw.. Heute wird erheblicher Wert auf die ästhetische Ausgestaltung des Fahrzeuges gelegt. Zu dieser Ästhetik tragen vor allem auch Felgen bei, die laufend verbessert und formschöner ausgestaltet werden. Vor allem werden Felgen deshalb aus Leichtmetall hergestellt, da sie zum einen leichter sind und zum anderen bei der Herstellung erheblich verbesserten Möglichkeiten unterliegen. Wird jetzt aber eine Anfahrhilfe und insbesondere ein Ringkette auf einen derartigen Fahrzeugreifen aufgezogen, so besteht die Gefahr der Beschädigung der Leichtmetallfelge, was äusserst unerwünscht ist. In der Regel besitzt die Anfahrhilfe oder Schneekette metallische Bauteile, die mit der Leichtmetallfelge in Berührung kommen können und die Leichtmetallfelge beschädigen insbesondere verkratzen.

Der vorliegenden Erfindung liegt die Aufgabe zugrunde eine Vorrichtung der o.g. Art zu verbessern, bei der es nicht zu einer Beschädigung der Felge kommt.

Zur Lösung dieser Aufgabe führt, dass zwischen dem Bauteil und der Felge zumindest ein Puffer angeordnet ist.

Der Vorteil des erfindungsgemässen Puffers ist, dass die Felge vor einem Angriff des "gefährlichen" Bauteils geschützt wird. Hierdurch kommt es nicht zu einem Beschädigen der Felge und zu einer Beeinträchtigung der Felgenoberfläche. Für die Ausgestaltung des Puffers bieten sich viele Möglichkeiten an. Nachfolgend sollen nur einige bevorzugte Ausführungsbeispiele beschrieben werden.

Im ersten Ausführungsbeispiel soll der Puffer das Bauteil zumindest teilweise umfangen. Hierbei ist daran gedacht, dass das Bauteil gänzlich von dem Puffer ummantelt wird. In diesem Fall bietet es sich an, das Bauteil mit einem Kunststoff, Gummi, Textil od. dgl. zu ummanteln, was beispielsweise auch im Tauch- oder Spritzverfahren geschehen kann.

In einem anderen Ausführungsbeispiel ist jedoch auch daran gedacht, das Bauteil mit einem entfernbaren Puffer zu umfangen. Hierbei sind wiederum viele Möglichkeiten denkbar. Ein einfaches Ausführungsbeispiel sieht vor, dass ein zwei oder mehrere Kunststoffklappen über eine Knicklinie miteinander verbunden sind. Mit den beiden Kunststoffklappen wird das Bauteil umfangen und dann die Klappen miteinander verbunden. Beispielsweise kann die Verbindung durch einen bekannten Druckknopfverschluss oder Schraube, Niete od. dgl. erfolgen. Auf diese Weise ist es möglich nach dem Aufziehen der Ringkette auf den Fahrzeugreifen die Puffer nur an der Stelle anzubringen, wo tatsächlich die Gefahr besteht, das ein Bauteil der Ringkette mit der Felge in Berührung kommt.

Ähnliches ist auch möglich, wenn der Puffer aus zwei Schalen besteht, welche um die Kette gelegt werden. Dabei ist es möglich, die beiden Schalen durch ein Filmscharnier od. dgl. zu verbinden. Es besteht aber auch die Möglichkeit, dass die beiden Schalen separat hergestellt und durch Schrauben od. dgl. miteinander verbunden werden. Bevorzugt befinden sich in den Schalen entsprechende Ausnehmungen bzw. Auslasskanäle, in die Kettenglieder sowohl von der Ringkette als auch von den Kettensträngen, die über die Lauffläche des Rades geführt werden, eingelegt werden können.

Die vorliegende Erfindung gilt im übrigen nicht nur, wenn für die Felge Metall und für die Bauteile ebenfalls Metall verwendet wird. In Zukunft ist es auch möglich, dass Felgen oder Kette und/oder andere Bauteile aus einem anderen Werkstoff, wie beispielsweise Keramik, hergestellt werden, der dann den- selben ästhetischen Anforderungen unterliegen kann. Die vorliegende Erfindung gilt auch für Felgen bzw. Bauteile aus anderen Werkstoffen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine Draufsicht auf einen Fahrzeugreifen mit einer handelsüblichen Ringkette;
Figur 2 eine Draufsicht auf den Fahrzeugreifen gemäss Figur 1 mit einer handelsüblichen Ringkette und erfindungsgemässen Puffern;
Figur 3 eine vergrössert dargestellte Draufsicht auf einen Teil der Ringkette gemäss Figur 2 mit einem Puffer;
Figur 4 eine Seitenansicht eines geöffneten Puffers;
Figur 5 eine Draufsicht auf einen Teil eines weiteren erfindungsgemässen Puffers in Gebrauchslage;
Figur 6 eine Seitenansicht des vollständigen Puffers gemäss Figur 5;
Figur 7 eine Stirnansicht des Puffers gemäss Figur 5, teilweise geschnitten;

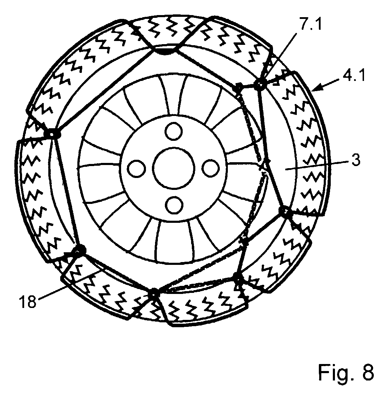

Figur 8 eine Draufsicht auf den Fahrzeugreifen gemäss Figur 1 mit einer erfindungsgemässen Ringkette.

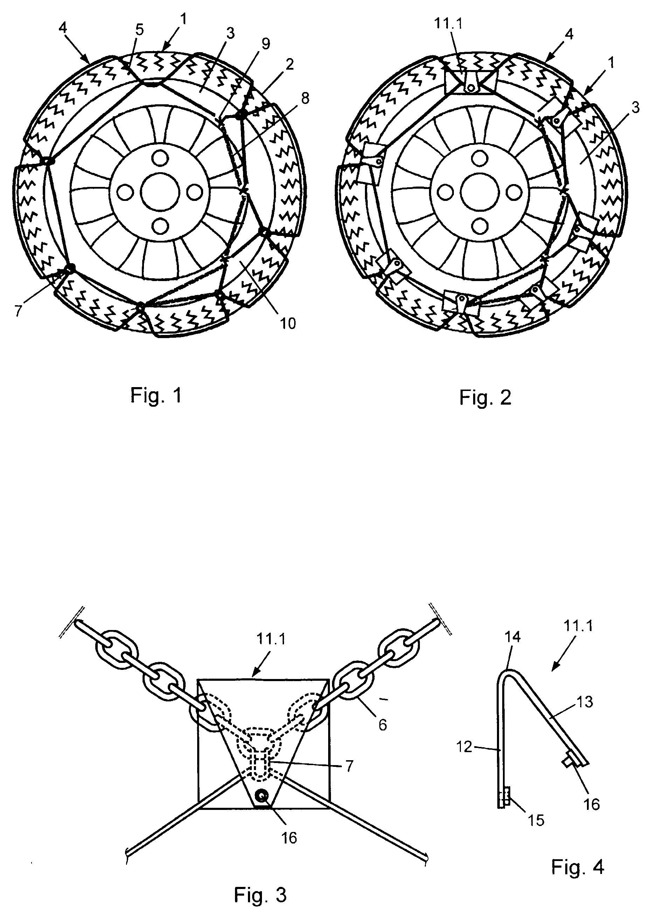

Gemäss Figur 1 ist von einem Fahrzeugreifen 1 ein Reifen 2, aufgezogen auf eine Felge 3, gezeigt. In der Regel besteht die Felge 3 aus Metall.

Um den Fahrzeugreifen 1 ist eine handelsübliche Ringkette 4 angeordnet, die aus verschiedenen Bauteilen besteht.

Beispielsweise sind Kettenabschnitte 5 mit einzelnen gezeigten Kettengliedern 6 angedeutet. Ferner gehören dazu Verbindungsglieder 7 sowie ein nicht näher gezeigtes Schloss bzw. Spannstränge 8, die mit Haken 9 in Kettenglieder eingehängt sind.

In der Regel besitzt die Felge 3 einen aufragenden Felgenrand 10, der unterhalb beispielsweise der Verbindungsglieder 7 oder aber einem anderen Bauteil der Ringkette 4 laufen kann. Damit der Felgenrand 10 aber auch andere Teile der Felge 3 nicht von den Bauteilen der Kette beschädigt werden, ist vorgesehen, dass zwischen dem Bauteil und der Felge 3 ein Puffer 11 angeordnet wird. In Figur 2 ist ein Ausführungsbeispiel eines Puffers 11 gezeigt. Dieser besteht gemäss den Figuren 3 und 4 aus zwei Klappen 12 und 13, die über eine Knicklinie 14 miteinander verbunden sind. Ferner besitzt jede Klappe 12 bzw. 13 ein Verschlusselement 15 bzw. 16 für einen Druckknopfverschluss.

Nach dem Aufziehen der Ringkette 4 auf den Fahrzeugreifen 1 oder auch davor werden die Klappen 12 und 13 des Puffers 11, wie in Figur 3 gezeigt, um "gefährliche" Bauteile 6 bzw. 7 gelegt und durch den Druckknopfverschluss miteinander verbunden. Auf diese Weise wird die Felge 3 und insbesondere der Felgenrand 10 gegenüber dem Bauteil 6 bzw. 7 geschützt.

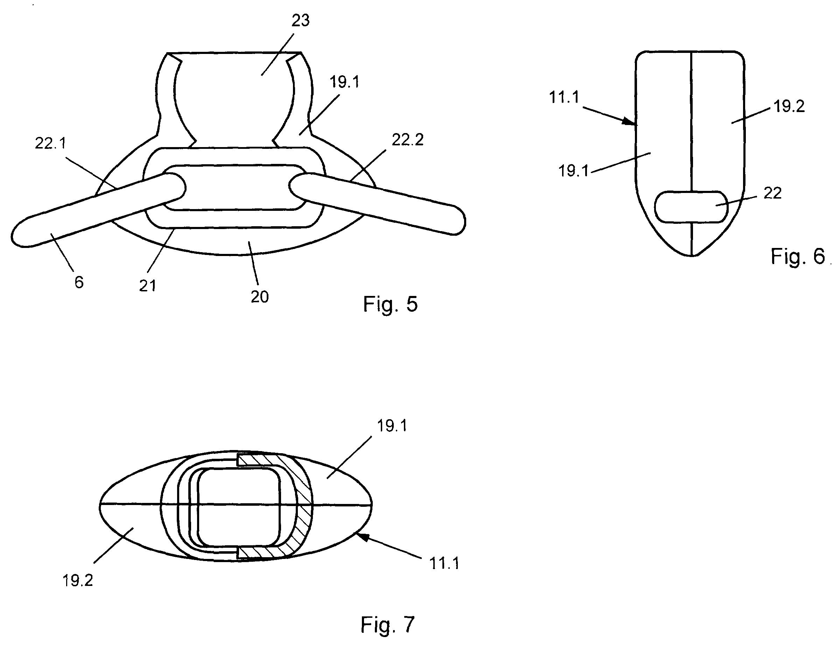

Nach dem Ausführungsbeispiel gemäss den Figuren 5 bis 7 besteht ein erfindungsgemässer Puffer 11.1 aus zwei Schalen 19.1 und 19.2, die beispielsweise an einem Steg 20 scharnierartig miteinander verbunden sein können. Anstelle dieser scharnierartigen Verbindung kann auch vorgesehen werden, dass die beiden Schalen 19.1 und 19.2 mittels Schrauben od. dgl. miteinander verbunden werden.

Bevorzugt sind die Schalen 19.1 und 19.2 identisch ausgebildet. Sie besitzen eine muldenförmige Ausnehmung 21 zur Aufnahme eines Kettengliedes 6. An die muldenförmige Ausnehmung 21 schliessen jeweils beidseits Auslasskanäle 22.1 und 22.2 an, durch die ebenfalls Kettenglieder 6 nach aussen geführt sind. Oberhalb der muldenförmigen Ausnehmung 21 befindet sich eine Ringausnehmung 23, durch die ein nicht näher gezeigter Kettenstrang geführt ist, der über die Lauffläche des Rades verläuft. Ggf. können hier auch zwei entsprechende Kettenstränge Platz finden.

Bei dem Ausführungsbeispiel der Erfindung gemäss Figur 6 wird keine handelsübliche Ringkette verwendet, sondern eine neue Ringkette 4.1 bei der "gefährliche" Bauteile 7.1 und die eine Felge 3 mehrfach querende Spannkette 18 von einem Puffer ummantelt sind. Bevorzugt besteht dieser Puffer aus einem Kunststoff, der auf bekannte Weise auf die Bauteile aufgebracht werden kann.

| **Positionszahlenliste** | | | | | |
|---|---|---|---|---|---|
| 1 | Fahrzeugreifen | 34 | | 67 | |
| 2 | Reifen | 35 | | 68 | |
| 3 | Felge | 36 | | 69 | |
| 4 | Ringkette | 37 | | 70 | |
| 5 | Kettenabschnitt | 38 | | 71 | |
| 6 | Kettenglieder | 39 | | 72 | |
| 7 | Verbindungsglieder | 40 | | 73 | |
| 8 | Spannstrang | 41 | | 74 | |
| 9 | Haken | 42 | | 75 | |
| 10 | Felgenrand | 43 | | 76 | |
| 11 | Puffer | 44 | | 77 | |
| 12 | Klappe | 45 | | 78 | |
| 13 | Klappe | 46 | | 79 | |
| 14 | Knicklinie | 47 | | | |
| 15 | Verschlusselement | 48 | | | |
| 16 | Verschlusselement | 49 | | | |
| 17 | | 50 | | | |
| 18 | Spannkette | 51 | | | |
| 19 | Schale | 52 | | | |
| 20 | Steg | 53 | | | |
| 21 | Ausnehmung | 54 | | | |
| 22 | Auslasskanal | 55 | | | |
| 23 | Ringausnehmung | 56 | | | |
| 24 | | 57 | | | |
| 25 | | 58 | | | |

## Patentansprüche

**1.** Vorrichtung zum Schutz einer Felge gegen nahe der Felge (3) angeordnete, insbesondere metallische Bauteile (6, 7, 7.1, 18), wie Kettenglieder, Schloss, Verbindungsglieder,
dadurch gekennzeichnet,
dass zwischen dem Bauteil (6, 7, 7.1, 18) und der Felge (3) zumindest ein Puffer (11, 11.1) angeordnet ist, der das Bauteil (6, 7.1, 18) zumindest teilweise oder ganz umfängt.

**3.** Vorrichtung nach Anspruch 2, dadurch gekennzeichnet, dass das Bauteil (7.1, 18) von einem Kunststoff, Gummi, Textil od. dgl. ummantelt ist.

**4.** Vorrichtung nach Anspruch 2, dadurch gekennzeichnet, dass das Bauteil (6, 7) von einem entfernbaren Puffer (11, 11.1) umfangen ist.

**5.** Vorrichtung nach Anspruch 4, dadurch gekennzeichnet, dass der Puffer (11) aus zwei über eine Knicklinie (14) miteinander verbundenen Klappen (12, 13) besteht, die gegenüber der Knicklinie (14) eine Druckknopf- (15, 16), Nieten-, Schraub- od. dgl. -verbindung eingehen.

**6.** Vorrichtung nach Anspruch 4, dadurch gekennzeichnet, dass der Puffer (11.1) aus zwei Schalen (19.1, 19.2) besteht, welche Innenausnehmungen (21, 23) und Auslasskanäle (22.1, 22.2) für Bauteile (6) aufweisen.
